# EUROPÄISCHE PATENTSCHRIFT

(11) **EP 1 107 411 B1**
(45) Veröffentlichungstag und Bekanntmachung des Hinweises auf die Patenterteilung: **18.02.2004**
(21) Anmeldenummer: 00125647.8
(22) Anmeldetag: 23.11.2000
(51) Int. Cl.: H02G 3/30, H05K 13/06

(54) **Leitungshalter für Verdrahtungen in Niederspannungsschaltkreisen elektrischer Geräte**
Conductor support for wiring of low-tension circuits in electrical apparatus
Elément de support de conducteurs pour le câblage de circuits à basse tension d'appareils électriques

(30) Priorität: 09.12.1999 DE 29921616 U
(43) Veröffentlichungstag der Anmeldung: 13.06.2001
(73) Patentinhaber: BJB GmbH & Co. KG, 59755 Arnsberg (DE)
(72) Erfinder: Henrici, Dieter Dipl.-Ing., 59757 Arnsberg (DE); Schmitt, Godehard Dipl.-Ing., 59469 Ense (DE)
(74) Vertreter: Patentanwälte Ostriga & Sonnet

(56) Entgegenhaltungen:
- DE-A- 19 646 734
- DE-U- 7 020 822
- DE-U- 9 013 096
- US-A- 5 510 579

## Beschreibung

Die Erfindung betrifft einen Leitungshalter für Verdrahtungen in Niederspannungsschaltkreisen elektrischer Geräte nach dem Oberbegriff des Anspruchs 1.

Der Erfindung liegt das Problem zugrunde, dass beim Verlegen von Verdrahtungen, z.B. in Schalteinrichtungen, Leuchten od.dgl., die zwischen den einzelnen elektrischen Baugruppen oder -elementen verlaufenden Leitungen sicher und sauber verlegt werden müssen. Bei automatischen Verfahren und Vorrichtungen zum Verdrahten von Anschlußstellen von Komponenten elektrischer Geräte, wie diese beispielsweise in EP 0 703 646 B1 beschrieben sind, kommen den Leitungshaltem besondere Bedeutung zu. Denn da die Verdrahtung selbst automatisch vor sich geht, ist es wünschenswert, wenn auch die Leitungen automatisch in die Halter abgelegt werden können. Dazu wiederum ist es erforderlich, dass die Leitungshalter zumindest von den Leitungen selbst, vornehmlich aber auch von dem die Leitungen fassenden und verlegenden Greifer der Verdrahtungsvorrichtung durchfahren werden können.

Die Erfindung geht aus von einem offenkundig vorbenutzten, druckschriftlich nicht belegbaren Leitungshalter der im Oberbegriff des Anspruches 1 näher umrissenen Art. Diese bekannte Leitungshalter weist eine Art Sockel mit Rastmitteln zum Verrasten in einem Ausschnitt beispielsweise eines Leuchtenbleches auf. Von dieser Befestigungseinrichtung aus erstrecken sich mit Abstand zueinander und annähernd parallel zwei elastische Federschenkel. An ihren von der Befestigungseinrichtung wegweisenden Enden weisen diese in einander teilweiser Überlappung einwärts umgebogene Enden auf. Unter diesen winkelartig abgebogenen Enden erstrecken sich, wiederum im wesentlichen parallel zueinander und mit ihren freien Enden in Richtung zur Befestigungseinrichtung zurückverlaufend, zwei schmale federelastische Leisten als Rückhaltemittel für die zwischen ihnen aufgenommenen Leitungen. Der Abstand dieser leistenförmigen Rückhaltemittel ist etwas geringer als der Durchmesser der im Leitungshalter aufzunehmenden isolierten Leitung.

Wird der Leitungshalter von einem Verlegewerkzeug in Längsrichtung des Kanals durchfahren, so öffnet das Verlegewerkzeug den Leitungshalter durch Auseinanderspreizen seiner Schenkel. Nach dem Durchfahren ist die Leitung zwischen die Rückhaltemittel eingeführt, und die Schenkel nehmen aufgrund ihrer rückstellenden Federeigenschaften ihre Ursprungsform zumindest annähernd wieder an.

Entsprechend der Bauhöhe des Leitungshalters können zwischen den federelastischen Rückhaltemitteln mehrere Leitungen übereinander im Leitungshalter aufgenommen werden. Dieses Prinzip ist bei einem Leitungshalter anderer Ausführung beispielsweise in DE 43 12 779 C2 beschrieben, wozu insbesondere auf deren Fig. 5 verwiesen wird.

Der vorliegenden Erfindung liegt nunmehr die Aufgabe zugrunde, einen Leitungshalter der vorausgesetzten Art in geschickter Weise so auszugestalten, dass der Leitungshalter trotz geringer Baugröße eine größere Anzahl von Leitungen aufnehmen und sicher halten kann.

Die Erfindung löst diese Aufgabe mit den Merkmalen des Anspruches 1 und ist dementsprechend dadurch gekennzeichnet, dass die Schenkel derart geneigt zueinander angeordnet sind, dass die Schenkelenden einen die Unverlierbarkeit von in dem Leitungshalter aufgenommenen Leitungen gewährleistenden geringen Abstand voneinander aufweisen, der Abstand der Schenkelwurzeln demgegenüber jedoch derart verbreitert ist, dass ein Ausweichraum für die Rückhaltemittel gebildet ist, um eine Vielzahl von Leitungen auch nebeneinander in dem Kanal unterzubringen.

Entsprechend der Erfindung ist im Prinzip der Leitungshalter gegenüber dem bekannten im Bereich der Schenkelwurzeln verbreitert, wodurch Raum geschaffen wird zur Unterbringung einer Vielzahl von Leitungen, die nunmehr - zumindest zum Teil - auch nebeneinander liegen können. Damit wird erreicht, dass der erfindungsgemäße Leitungshalter mehr Leiter aufnehmen kann als der herkömmliche Leitungshalter, ohne jedoch höher zu bauen.

In weiterer Ausgestaltung ist vorgesehen, dass die Breite des Leitungshalters im Bereich der Schenkelwurzeln im wesentlichen etwa so groß ist wie der Außenabstand der Schenkelenden in ihrem vom Verlegewerkzeug maximal aufgespreizten Zustand. Mit dieser weiteren Ausgestaltung macht sich die Erfindung die Erkenntnis zunutze, dass für die Baubreite bzw. das Einbaumaß eines Leitungshalters das größte Außenmaß bestimmend ist, welches beim Stand der Technik durch die vom Verlegewerkzeug aufgespreizten Schenkel definiert ist. Der Erfolg des erfindungsgemäßen Merkmals besteht darin, dass der Leitungshalter nunmehr eine größere Anzahl von Leitungen aufnehmen kann, ohne in der von ihm ohnehin benötigten Breite einen größeren Platzbedarf zu beanspruchen als der herkömmliche Leitungshalter. Das bedeutet, dass an dem Gerät, an dem die Leitungen zu verlegen sind, z.B. am Leuchtenblech, ein zusätzlicher Freiraum nicht erforderlich ist.

Gemäß weiterer Ausgestaltung ist es vorteilhaft, wenn die Rückhaltemittel im wesentlichen die Form schmaler Leisten aufweisen, die innen an den freien Enden der Schenkel angebunden sind.

Von besonderem Vorteil ist es in diesem Zusammenhang, wenn die Rückhaltemittel eine geringere federelastische Rückstellkraft aufweisen als die Schenkel und wenn die Elastizität der Rückhaltemittel zu ihren freien Enden hin zunimmt. Dies kann insbesondere dadurch erreicht werden, dass die Rückhaltemittel zu ihren freien Enden hin schmaler und/oder dünner werden. Der Erfolg dieser Merkmale beruht darauf, dass die derart angeordneten bzw. gestalteten Rückhaltemittel zu ihren freien Enden hin immer weiter auseinander weichen können und so für die eingelagerten Leitungen einen kontinuierlich sich verbreiternden Aufnahmeraum schaffen, so dass insbesondere im Bereich der freien Enden der Rückhaltemittel eine Vielzahl von Leitungen ohne weiteres sowohl über- als auch nebeneinander untergebracht werden können.

Von weiterer Bedeutung ist noch eine Ausgestaltung, die vorsieht, dass zumindest die kanalbegrenzende Innenseite des Leitungshalters zwischen den Schenkeln, an der Leiter zur Anlage kommen, mit einer Rückhalteeinrichtung gegen Längszugkräfte an dem jeweiligen Leiter versehen ist. Dabei ist es zweckmäßig, wenn die Rückhalteeinrichtung wenigstens eine schmale, im wesentlichen schneidenförmige Rippe umfaßt, die zur Leiterlängsrichtung quer verlaufend angeordnet ist. Derartige Rückhalteeinrichtungen sind ohne weiteres beim Herstellen der Leitungshalter insbesondere im Wege des Spritzgießens mit einformbar.

Im übrigen versteht sich die Erfindung am besten anhand der nachfolgenden Beschreibung eines bevorzugten Ausführungsbeispiels. In den Zeichnungen zeigen:
- Fig. 1: eine Stimansicht eines Leitungshalters, wobei die Blickrichtung etwa der Fahrtrichtung eines Verlegewerkzeugs entspricht,
- Fig. 2: eine Aufsicht auf den Leitungshalter entsprechend dem Ansichtspfeil II in Fig. 1,
- Fig. 3: eine perspektivische Ansicht eines Leitungshalters in gegenüber den Fig. 1 und 2 verkleinertem Maßstab, jedoch in einem größeren Maßstab als das Original,
- Fig. 4: eine perspektivische Darstellung des gegenüber Fig. 3 aufgebrochenen Leitungshalters,
- Fig. 5: eine Fig. 1 entsprechende Stirnansicht mit einer im Leitungshalter aufgenommenen Leitung,
- Fig. 6: eine entsprechende Darstellung mit einer Vielzahl von im Leitungshalter untergebrachten Leitungen und gleichzeitiger schematischer Darstellung des Durchfahrens des Leitungshalters mittels eines Verlegewerkzeugs, und
- Fig. 7: eine Darstellung entsprechend Fig. 5 mit einer Vielzahl von im Leitungshalter aufgenommenen Leitungen nach dem Durchfahren des Leitungsverlegewerkzeugs.

In den Zeichnungen ist mit der Bezugsziffer 10 ein Leitungshalter insgesamt bezeichnet. Um den Leitungshalter 10 an einem Gerät, z.B. einem Leuchtenblech od.dgl. auf einfache Weise anbringen zu können, weist er Befestigungseinrichtungen 11 auf, die beim dargestellten Ausführungsbeispiel aus zwei in Längsrichtung des Leitungshalters 10 voneinander beabstandeten, jeweils zweiflügeligen Rastzungen 12 bestehen, die über je einen Steg 13 mit einer Basisplatte 14 verbunden sind.

Die Basisplatte 14 bildet die Steg-Platte eines insgesamt im wesentlichen U-förmigen Gebildes mit zwei Schenkeln 15 aus, die an die Basisplatte 14 einstückig-stoffschlüssig angespritzt sind.

Der gesamte Leitungshalter 10 samt allen seinen Elementen ist aus einem einstückigen Kunststoff-Spritzgußteil, vornehmlich aus thermoplastischem, elastischem Kunststoff hergestellt. Bei den Schenkeln, 15 handelt es sich folglich um federelastische Schenkel.

An einer Seite, und zwar beim Ausführungsbeispiel an der der Befestigungseinrichtung 11 gegenüberliegenden Seite begrenzen die Schenkelenden 16 einen Spalt 17 der Spaltenweite 18. Die Weite 18 des Spaltes 17 ist geringer als der Außendurchmesser 19 einer elektrischen Leitung 20 mit Isolierumhüllung 21 und Draht- oder Litzenseele 22.

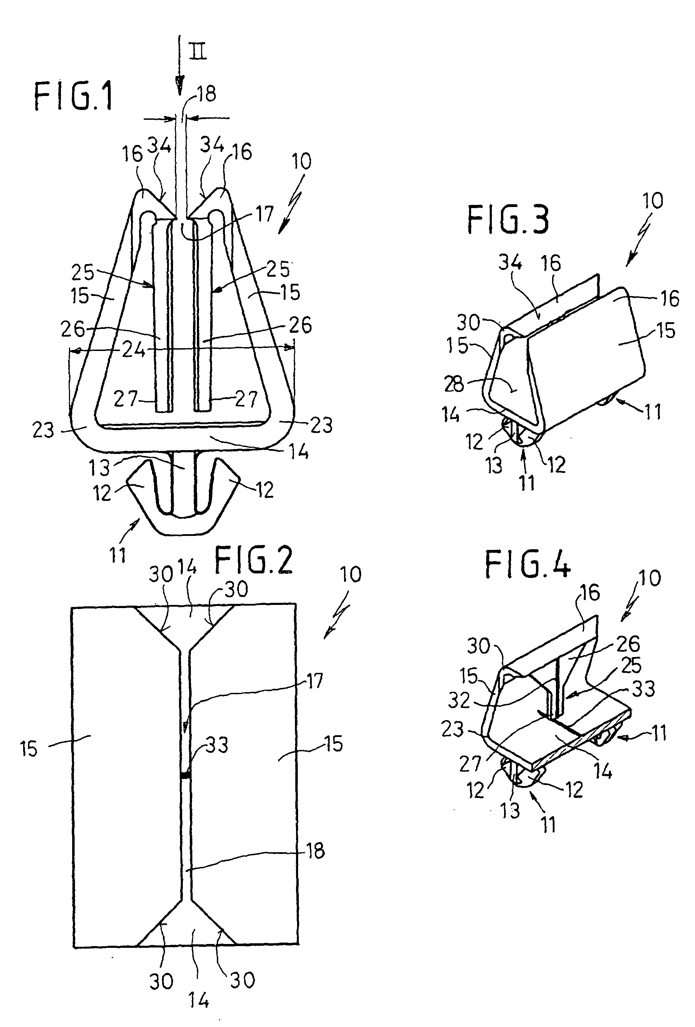

Die Wurzeln, mit denen die federelastischen Schenkel 15 längsaußenseitig an der Basisplatte 14 angebunden sind, sind mit 23 bezeichnet. In diesem Bereich weist der Leitungshalter 10 seine größte Breite auf (Breitenmaß 24 in Fig. 1).

Im Bereich der Schenkelenden 16 sind an diese im wesentlichen leistenartige Rückhaltemittel 25 angeformt. Diese Rückhaltemittel 25 bestehen im Prinzip aus federelastischen Zungen 26, die mit ihren freien Enden 27 gegen die Innenfläche 28 der Basisplatte 14 weisen und in einem geringen Abstand davon enden.

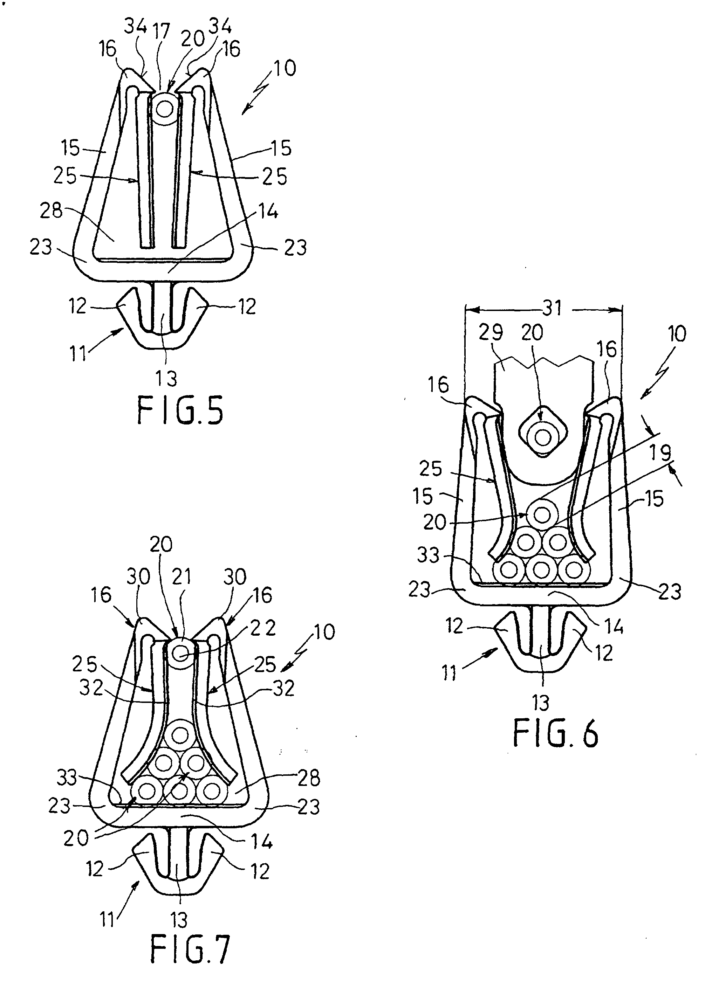

Die Rückhaltemittel 25 weisen beim konkreten Ausführungsbeispiel eine Form auf, wie sie am besten aus Fig. 4 ersichtlich ist. An einen ersten etwa trapezförmigen Abschnitt 26 schließt sich zum freien Ende hin ein verjüngter zungenartiger Abschnitt 27 an. Diese Gestaltung ist eine Möglichkeit, die Elastizität der Rückhaltemittel 25 zu ihren freien Enden hin kontinuierlich zu erhöhen. Dadurch wiederum ist es möglich, dass die Rückhaltemittel 25 sich zu den freien Enden hin um so weiter aufspreizen können, wie dies die Fig. 6 und 7 deutlich zeigen. Auf diese Weise wird zur Aufnahme einer Vielzahl von Leitungen ein sich nach unten hin trapezförmig verbreitender Aufnahmeraum 28 geschaffen.

Fig. 6 zeigt schematisch einen Leitungsverlegefinger 29, der eine Leitung 20 längs eines vorbestimmten bzw. vorgeschriebenen Verlegeweges führt. Dieser Weg führt auch durch weinen oder mehrere Leitungshalter 10. Der an seinem in Verfahrrichtung vorn liegenden Seite schneidenartig geschrägte Verlegefinger 29 gelangt zunächst gegen stirnseitige Schrägflächen 30 an den Stirnseiten der Schenkelenden 16 und kann so in den Spalt 17 eingreifen und bei weiterem Vorschub die beiden Schenkel 15, wie aus Fig. 6 ersichtlich, auseinanderspreizen.

Aus Fig. 6 ist des weiteren ersichtlich, dass die freien Enden 16 der derart aufgespreizten Schenkel 15 einen Außenabstand 31 definieren. Im Sinne der Erfindung ist dieses Außenmaß 31 im wesentlichen etwa höchstens gleich dem größten Außenmaß 24. Dies zeigt, dass die Erfindung, sich die Tatsache zunutze macht, dass die gesamte Baubreite des Leitungshalters 10 in der Weise zur Aufnahme einer Mehrzahl von Leitungen 20 genutzt wird, dass man diese Breite etwa so gestaltet wie die durch das Aufspreizen der Schenkel 15 mittels des Verlegewerkzeugs 29 ohnehin benötigte Baubreite des Leitungshalters 10.

Wie des weiteren aus den Fig. ersichtlich ist, befinden sich an den Innenseiten der federelastischen Rückhaltemittel 25 jeweils eine längsverlaufende, dünne sowie schneidenartige Rippe 32, die die Aufgabe hat, sich ein wenig in die weiche Isolierumhüllung 21 einer Leitung einzugraben und so eine wirksame formschlüssig wirkende bzw. reibkrafterhöhende Längsverschiebesicherung ausbilden.

Eine vergleichbare schneidenartige Rippe 33 befindet sich als Rückhalteeinrichtung auf der Innenfläche der Basisplatte 14. Diese hat, wie es insbesondere die Fig. 6 und 7 erkennen lassen, insbesondere den Zweck, die dort abgelegte Mehrzahl von Leitern - im Zusammenwirken mit den von den Rückhalte-Leisten 25 nach unten hin ausgeübten Kraftkomponenten - an einer Längsverschiebung zu sichern.

Hervorzuheben ist noch, dass der Leitungshalter 10 aufgrund seines nach außen offenen Spaltes 17 in Verbindung mit den ihn flankierenden Führungsschrägen 34 sowie den Einführungsschrägen 30 auch sehr gut zur manuellen Verdrahtung geeignet ist. Dies ist z.B. wichtig im Hinblick auf evtl. notwendige Nachverdrahtungen oder Sonderverdrahtungen in Spezialfällen.

## Patentansprüche

1. Leitungshalter (10) für Verdrahtungen in Niederspannungsschaltkreisen elektrischer Geräte, mit einem mit Befestigungseinrichtungen (11) versehenen Sockel (14) und mit wenigstens zwei mit diesem verbundenen, federelastischen Schenkeln (15), deren Enden (16) Einführschrägen (30) für ein den Kanal durchfahrendes und die Schenkel (15) dabei aufspreizendes Leitungsverlegewerkzeug (29) zugeordnet sind, wobei zwischen den Schenkeln (15) ein die Leitungen (20) aufnehmender durchgehender Kanal begrenzt ist, dem federelastische Rückhaltemittel (25) für in dem Kanal aufgenommene Leitungen (20) zugeordnet sind, die in einer den freien Durchtrittsquerschnitt des Kanals begrenzenden Stellung stehen und quer zu der Kanallängsrichtung federelastisch ausweichend ausgebildet bzw. gelagert sind, **dadurch gekennzeichnet, dass** die Schenkel (15) derart geneigt zueinander angeordnet sind, dass die Schenkelenden (16) einen die Unverlierbarkeit von in dem Leitungshalter (10) aufgenommenen Leitungen (20) gewährleistenden geringen Abstand (18) voneinander aufweisen, der Abstand der Schenkelwurzeln (23) demgegenüber jedoch derart verbreitert ist, dass ein Ausweichraum (28) für die Rückhaltemittel (25) gebildet ist, um eine Vielzahl von Leitungen (20) auch nebeneinander in dem Kanal unterzubringen.

2. Leitungshalter nach Anspruch 1, **dadurch gekennzeichnet, dass** die Breite (24) des Leitungshalters (10) im Bereich der Schenkelwurzeln (23) im wesentlichen etwa so groß ist wie der Außenabstand (31) der Schenkelenden (16) in ihrem vom Verlegewerkzeug (31) maximal aufgespreizten Zustand.

3. Leitungshalter nach Anspruch 1 oder 2, **dadurch gekennzeichnet, dass** die Rückhaltemittel (25) im wesentlichen die Form schmaler Leisten aufweisen, die innen an den freien Enden (16) der Schenkel (15) angebunden sind.

4. Leitungshalter nach einem der Ansprüche 1 bis 3, **dadurch gekennzeichnet, dass** die Rückhaltemittel (25) eine geringere federelastische Rückstellkraft aufweisen als die Schenkel (15).

5. Leitungshalter nach Anspruch 4, **dadurch gekennzeichnet, dass** die Elastizität der Rückhaltemittel (25) zu ihren freien Enden hin zunimmt.

6. Leitungshalter nach Anspruch 5, **dadurch gekennzeichnet, dass** die Rückhaltemittel (25) zu ihren freien Enden hin schmaler und/oder dünner werden.

7. Leitungshalter nach einem der vorherigen Ansprüche, **dadurch gekennzeichnet, dass** zumindest die kanalbegrenzende Innenseite des Leitungshalters (10) zwischen den Schenkeln (15), an der Leiter (20) zur Anlage kommen, mit einer Rückhalteeinrichtung (32) gegen Längszugkräfte an dem jeweiligen Leiter (20) versehen ist.

8. Leitungshalter nach Anspruch 7, **dadurch gekennzeichnet, dass** die Rückhalteeinrichtung (32) wenigstens eine schmale, im wesentlichen schneidenförmige Rippe (33) umfaßt, die zur Leiterlängsrichtung quer verlaufend angeordnet ist.

## Claims

1. Cable-holder (10) for wiring systems in low-voltage circuits of electrical appliances, said cable-holder having a base (14) which is provided with fastening arrangements (11), and having at least two springy flanges (15) which are connected to said base and with whose ends (16) there are associated introduction chamfers (30) for a cable-installing tool (29) that travels through the channel and, in the process, spreads open the flanges (15), there being delimited between the flanges (15) a continuous channel which receives the cables (20) and with which there are associated springy restraining means (25) for cables (20) received in the channel, which restraining means are located in a position that delimits the free cross-section of passage of the channel and are constructed or mounted so as to deflect in a springy manner transversely to the longitudinal direction of the channel, **characterised in that** the flanges (15) are disposed so as to be inclined in relation to one another in such a way that the ends (16) of said flanges are at a small distance (18) from one another that guarantees the captive condition of cables (20) received in the cable-holder (10), but the distance between the roots (23) of the flanges is, on the other hand, broadened in such a way that a deflecting space (28) for the restraining means (25) is formed in order to accommodate a large number of cables (20), even side by side, in the channel.

2. Cable-holder according to claim 1, **characterised in that** the breadth (24) of the cable-holder (10) in the region of the roots (23) of the flanges is substantially approximately as large as the external distance (31) between the ends (16) of the flanges in their condition in which they are spread open to the maximum extent by the installing tool (31).

3. Cable-holder according to claim 1 or 2, **characterised in that** the restraining means (25) have substantially the shape of narrow strips which are attached internally to the free ends (16) of the flanges (15).

4. Cable-holder according to one of claims 1 to 3, **characterised in that** the restraining means (25) have a lower springy restoring force than the flanges (15).

5. Cable-holder according to claim 4, **characterised in that** the elasticity of the restraining means (25) increases towards their free ends.

6. Cable-holder according to claim 5, **characterised in that** the restraining means (25) become narrower and/or thinner towards their free ends.

7. Cable-holder according to one of the previous claims, **characterised in that** at least that inner side of the cable-holder (10) between the flanges (15) which delimits the channel and against which conductors (20) rest, is provided with an arrangement (32) providing restraint against longitudinal tensile forces on the particular conductor (20).

8. Cable-holder according to claim 7, **characterised in that** the restraining arrangement (32) comprises at least one narrow, substantially knife-edge-shaped rib (33) which is disposed in a manner running transversely to the longitudinal direction of the conductor.

## Revendications

1. Élément support de conducteurs (10) pour des câblages dans des circuits basse tension d'appareils électriques, avec un socle (14) muni de dispositifs de fixation (11) et avec au moins deux branches (15) ayant l'élasticité de ressorts, reliées à celui-ci, branches aux extrémités (16) desquelles sont associées des pentes d'introduction (30) pour un outil de pose de conducteur (29) passant dans le canal et ouvrant les branches (15) en les écartant, sachant que, entre les branches (15), un canal continu, recevant les conducteurs (20), est délimité, canal auxquels sont associés des moyens de retenue (25) ayant l'élasticité de ressorts, pour des conducteurs (20) logés dans le canal, et moyens de retenus mis en une position limitant la section transversale de passage libre du canal et configurés ou montés de manière à pouvoir se déformer dans un but d'échappement avec l'élasticité d'un ressort, transversalement par rapport à la direction longitudinale du canal, **caractérisé en ce que** les branches (15) sont disposées, inclinées les unes par rapport aux autres, **en ce que** les extrémités des branches (16) présentent un faible espacement mutuel (18) assurant l'imperdabilité des conducteurs (20) logés dans l'élément support de conducteur (10), l'espacement entre les racines de branches (23), par contre, étant élargi de manière à former un espace d'échappement (28) pour les moyens de retenue (25), afin de loger dans le canal, également, les uns à côté des autres, une pluralité de conducteurs (20).

2. Élément support de conducteurs selon la revendication 1, **caractérisé en ce que** la largeur (24) de l'élément support de conducteur (10), dans la zone des racines de branche (23), est sensiblement à peu près de la valeur de l'espacement extérieur (31) des extrémités de branches (16) à leur état d'ouverture maximale par écartement, de par l'outil de pose (31).

3. Élément support de conducteurs selon la revendication 1 ou 2, **caractérisé en ce que** les moyens de retenue (25) présentent essentiellement la forme de bandes étroites, reliées par la matière, intérieurement, aux extrémités (16) libres des branches (15).

4. Élément support de conducteurs selon la revendication 1 à 3, **caractérisé en ce que** les moyens de retenue (25) présentent une force de retenue avec élasticité d'un ressort, de valeur inférieure à celle des branches (15).

5. Élément support de conducteurs selon la revendication 4, **caractérisé en ce que** l'élasticité des moyens de retenue (25) va en augmentant lorsque l'on va vers leurs extrémités libres.

6. Élément support de conducteurs selon la revendication 5, **caractérisé en ce que** les moyens de retenue (25) deviennent plus étroits et/ou plus minces en allant vers leurs extrémités libres.

7. Élément support de conducteurs selon l'une des revendications précédentes, **caractérisé en ce qu'**au moins la face intérieure, limitant le canal, de l'élément support de conducteurs (10) entre les branches (15), face intérieure sur laquelle des conducteurs (20) viennent en appui, est munie d'un dispositif de retenue (32), agissant, à l'encontre des efforts longitudinaux de traction, sur le conducteur (20) respectif.

8. Élément support de conducteurs selon la revendication 7, **caractérisé en ce que** le dispositif de retenu (32) comprend au moins une nervure (33) étroite, sensiblement en forme de tranchant, disposée en s'étendant transversalement par rapport à la direction longitudinale du ou des conducteurs.
